# EUROPEAN PATENT SPECIFICATION

(11) **EP 1 757 411 B1**
(45) Date of publication and mention of the grant of the patent: **17.11.2010**
(21) Application number: 04733667.2
(22) Date of filing: 18.05.2004
(51) Int. Cl.: B25J 15/04

(54) **MASTER PLATE AND TOOL PLATE FOR ROBOT ARM COUPLING DEVICE, AND ROBOT ARM COUPLING DEVICE**
MASTERPLATTE UND WERKZEUGPLATTE FÜR ROBOTERARMKOPPELVORRICHTUNG UND ROBOTERARMKOPPELVORRICHTUNG
PLAQUE MAITRE ET PLAQUE OUTIL DESTINEES A UN DISPOSITIF DE COUPLAGE D'UN BRAS ROBOTIQUE, DISPOSITIF DE COUPLAGE DE BRAS ROBOTIQUE

(43) Date of publication of application: 28.02.2007
(73) Proprietor: BL Autotec, Ltd., Kobe-shi, Hyogo 652-0883 (JP)
(72) Inventor: TSUTSUMI, Mikio, c/o BL Autotec, Ltd., Hyogo 652-0883 (JP); TAKAHAMA, Yuichi, c/o BL Autotec, Ltd., Hyogo 652-0883 (JP)
(74) Representative: Laufhütte, Dieter
(86) International application number: PCT/JP2004/007071
(87) International publication number: WO 2004/113031

(56) References cited:
- EP-A1- 0 548 404
- EP-A2- 0 237 497
- WO-A-03/101673
- DE-A1- 2 936 639
- DE-U1- 29 718 725
- JP-A- 2003 117 868
- JP-A- 2003 117 869
- US-A- 4 696 524
- US-A- 4 708 040
- US-A- 4 726 269

## Description

### Technical Field

This invention relates to a master plate and a tool plate for a robot arm coupling apparatus and a robot arm coupling apparatus formed of a combination of them.

### Background Art

WO 03/101673 discloses a robot arm coupling apparatus which does not show grooves but comprises: a master plate attachable to a robot arm; a tool plate to which a tool or like element is attachable; and a locking device for joining and locking both the plates together, said locking device including: a cam member (28) supported on the master plate slidably between a locking position and an unlocking position; a plurality of ball members arranged around the cam member and supported in ball accommodation holes of the master plate for movement substantially orthogonal to a sliding direction of the cam member ; and a ball retainer disposed at the tool plate and engageable with the ball members to hold both the plates connected to each other when the cam member moves to the locking position, wherein
the surface of the cam member is formed with a master side first inclined portion whose cross section taken lengthwise of the cam has a shape inclined in a specified direction with respect to the sliding direction of the cam member, a straight portion located closer to the locking position of the cam member than the master side first inclined portion and joined to the master side first inclined portion, the cross section of said straight portion (31) taken lengthwise of the cam being parallel to the sliding direction of the cam member, and a master side second inclined portion located closer to the locking position of the cam member than the straight portion, the cross section of said master side second inclined portion taken lengthwise of the groove being inclined in the same direction as the direction of inclination of the master side first inclined portion, arcuate portion (34) whose cross section taken lengthwise of the groove is arcuate,
a surface of each said tool side ball retainer is formed with a tool side inclined portion whose cross section taken lengthwise of the retainer has a shape inclined opposite to the direction of inclination of the master side first inclined portion, and
the robot arm coupling apparatus is configured so that when the cam member is positioned in the locking position, each said master side first inclined portion pushes one corresponding said ball member against one corresponding said tool side inclined portion.

Coupling apparatuses for connecting and disconnecting a tool or like element to and from a robot arm include generally known coupling apparatuses comprising a master plate (inner assembly) attached to the robot arm, a tool plate (outer assembly) to which the tool or like element is attachable and a locking device for connecting and locking both the plates to each other.

One of conventional coupling apparatuses of such kind is a coupling apparatus capable of quickly connecting and disconnecting the inner assembly to and from the outer assembly. For example, as disclosed in the specification and drawings of U.S. Patent No. 4,696,524, there is known a coupling apparatus in which the locking device comprises: a piston member supported by the inner assembly slidably between a locking position and an unlocking position; a plurality of ball members arranged around the piston member and supported to the inner assembly; and a ball retainer disposed in the outer assembly, contactable at the tapered surface with the ball members and holding both the plates connected to each other in cooperation with the ball members when the piston member moves to the locking position. According to this apparatus, when the piston member moves to the locking position, the ball members push up the outer assembly through the tapered surface of the ball retainer, thereby connecting the inner assembly to the outer assembly.

In the above conventional coupling apparatus, however, a portion of the piston member making contact with the ball members when the piston member is in the locking position is its cylindrical surface extending in parallel with the a sliding direction of the piston member and, therefore, processing irregularities in the inner assembly or the outer assembly would prevent the ball members from fully moving to the locking position. This presents the possibility that in connecting the inner assembly to the outer assembly, their connecting surfaces do not mate with each other, which provides a poor reproducibility of the connecting position.

To solve the above problem, as disclosed in Published Japanese Patent Application No. H04-63688, a technique is proposed in which a locking device for joining and locking the master plate and the tool plate together comprises: a disc-shaped cam member supported to the master plate slidably between a locking position and an unlocking position; a plurality of ball members arranged around the cam member and supported to the master plate for movement substantially orthogonal to a sliding direction of the cam member; and a ring-shaped ball retainer engaging with the ball members to connect both the plates to each other and hold them connected when the cam member moves to the locking position, the outer periphery of the cam member and the inner periphery of the ball retainer are formed with a master side tapered surface (cam surface) and a tool side tapered surface (cam surface) inclined opposite to the master side tapered surface, respectively, and the master side tapered surface pushes the ball members against the tool side tapered surface with the cam member in the locking position to prevent a gap from being created between the connecting surfaces of both the master plate and the tool plate during connection between both the plates, thereby improving the reproducibility of the connecting position.

For robot arm coupling apparatuses of this kind, there has been a recent demand to reduce the thickness (size) of connected master and tool plates along the connecting direction for the following itemized reasons.
(1) First, when a robot handles a work to move it from one pressing machine to another, for example, in a pressing process on a vehicle production line, the robot inserts a coupling apparatus, together with the work and a holder for the work, in between opened die halves of the pressing machine for the purpose of loading and unloading of the work onto and from the pressing machine. In this case, since the opening stroke of the die is limited, the robot arm coupling apparatus needs to have a thickness as thin as possible.
(2) In a structure in which a coupling apparatus is fitted between a wrist flange of a robot and a hand thereof for gripping a work, if the distance from the flange to the gravity center of the hand is long, the load (moment) on the robot becomes larger accordingly. In order to reduce the load, it is needed to reduce the thickness of the coupling apparatus to shorten the distance from the flange to the gravity center of the hand as much as possible.
(3) Furthermore, in the structure in which a coupling apparatus is fitted between a wrist flange of a robot and a had thereof for gripping a work, a thick coupling apparatus would cause the creation of an area in which the robot is difficult to work or cannot work. In order to reduce or eliminate such area, it is also needed to reduce the thickness of the coupling apparatus.

Consideration is made of the structure of the proposed technique in line with the above needs. In the proposed technique, external load is born by fastening both the plates through the contact between the master side tapered surface in the arcuate outer periphery of the cam member and the ball members and the contact between the ball members and the tool side tapered surface in the arcuate inner periphery of the ball retainer. Therefore, in order to reduce the increase in surface pressure at each contact point, large-diameter ball members must be used. Thus, not only the thickness of the coupling apparatus becomes thicker by the diameter increase of the large-diameter ball members, but also the operating stroke of the cam member in the direction of thickness of the coupling apparatus must be increased in order to push the ball members radially outward. The increase of the operating stroke also increases the thickness of the coupling apparatus, which presents a difficulty in achieving a sufficient thinning of the coupling apparatus.

Alternatively, in order to reduce the surface pressure at each contact point, the ball members may be replaced with roller members. In this case, the contact area between the master side tapered surface in the cam member outer periphery and the roller members and the contact area between the roller members and the tapered surface in the inner periphery of the ball retainer (roller stopper) become larger than in the case of using the ball members, thereby reducing the surface pressure at each contact point.

In this case, there is no difference in effect from the former case but that, out of four-directional curvature radii determining the surface pressure at each contact point, one in the axial direction of the corresponding roller is linear, and the additional effect is small. Therefore, this approach inevitably involves to increase the diameter of each roller member and cannot be an effective solution to make the thickness of the coupling apparatus as thin as possible.

Furthermore, the roller members are required, unlike the ball members, to have a structure capable of rolling without tilting (lodging) when pushed out. If this is accomplished, not only the number of parts increases but also the difficulty in machining the structure for accommodating the roller members becomes high, which inevitably invites cost rise.

The present invention has been made in view of the above points and, therefore, its object is to make the robot arm coupling apparatus as described above thinner while employing ball members by improving the structure of the robot arm coupling apparatus.

### Disclosure of the Invention

To attain the above object, in the present invention, each ball member is placed in corresponding ball receiving grooves of substantially arcuate cross section formed in both of a cam member and a ball retainer and the inner surfaces of the ball receiving grooves are each brought into contact with the ball member, thereby increasing their contact areas.

Specifically, the present invention is directed to a robot arm coupling apparatus according to claim 1.

With this configuration, when the cam member moves to the locking position, it pushes, with the master side first inclined portions of its master side ball receiving grooves, the ball members against the tool side inclined portions of the toll side ball receiving grooves in the ball retainer. The wedge effect of the master side first inclined portions urges the ball members to pushed radially outward. Thus, the ball members push the ball retainer and the tool plate through the tool side inclined portions to urge them towards the master plate, thereby connecting both the plates with no gap therebetween.

During the connection, since each ball member is recessed in the corresponding master side ball receiving groove of substantially arcuate cross section in the cam member and the corresponding, similar tool side ball receiving groove in the ball retainer, the ball member makes contact with the respective inner surfaces (essentially, the bottom surfaces) of the master side ball receiving groove and the tool side ball receiving groove. The contact is a contact of the outer periphery of the ball member with the inner surfaces of the ball receiving grooves, i.e., a contact between the arcuate surfaces curved in the same direction. Therefore, as compared to the contact configuration of the ball member with the master side tapered surface in the outer periphery of the cam member and the tool side tapered surface in the inner periphery of the ball retainer, i.e., the contact configuration between their arcuate surfaces curved in opposite directions, the contact area can be increased. In other words, even with the use of small-diameter ball members, the contact area can be increased to reduce the contact surface pressure. This makes it possible for the ball members to have a smaller diameter, thereby making the operating stroke of the cam member smaller and, in turn, making the robot arm coupling apparatus thinner.

The robot arm coupling apparatus is configured so that the inner surface of each said master side ball receiving groove has a straight portion located closer to the locking position of the cam member than the master side first inclined portion and joined to the master side first inclined portion, the cross section of said straight portion taken lengthwise of the groove being parallel to the sliding direction of the cam member.

With this configuration, since the straight portion is joined to the master side first inclined portion towards the locking position of the cam member, even if the slid position of the cam member is not held in the specified position so that the ball members are displaced radially inward to move back the cam member towards the unlocking position, i.e., on the retracting side, the force of the ball members to retract the cam member becomes ineffective at that straight portion, whereby separation between the master plate and the tool plate is prevented.

The robot arm coupling apparatus is configured so that the inner surface of each said master side ball receiving groove is formed with a master side second inclined portion located closer to the locking position of the cam member than the straight portion, the cross section of said master side second inclined portion taken lengthwise of the groove being inclined in the same direction as the direction of inclination of the master side first inclined portion, and the straight portion and the master side second inclined portion continue through an arcuate portion whose cross section taken lengthwise of the groove is arcuate.

Alternatively, the robot arm coupling apparatus may be configured so that the inner surface of each said master side ball receiving groove has an arcuate portion located closer to the locking position of the cam member than the straight portion and joined to the straight portion, the cross section of said arcuate portion taken lengthwise of the groove being inclined substantially in the same direction as the direction of inclination of the master side first inclined portion.

The radius of each said master side ball receiving groove and/or each said tool side ball receiving groove preferably ranges from 0.05 mm larger to twice larger than the radius of each said ball member. Alternatively, the radius of each said master side ball receiving groove and/or each said tool side ball receiving groove may range from 0.05 mm larger to 1.5 times larger than the radius of each said ball member.

A rotation stop mechanism is preferably provided for inhibiting the cam member from rotating relative to the master plate about an axis along the sliding direction of the cam member. If the cam member is held against rotation in this manner, the master side ball receiving grooves in the cam member can be associated one with each of the ball members and can receive the corresponding ball members not only when the cam member is in the locking position but also when it is in the unlocking position, namely, at any time, thereby providing a stable operation.

According to the invention, the master plate comprises the features of claim 6.

the locking position, to come into contact with the corresponding tool side inclined portions of the ball retainer and hold the tool plate connected to the master plate. Moreover, the cam member has a plurality of master side ball receiving grooves of substantially arcuate cross section formed to extend substantially along the sliding direction of the cam member and each capable of receiving one corresponding said ball member, said master side ball receiving grooves being spaced in the circumferential direction of the cam member in correspondence with the positions of the ball members, and the inner surface of each said master side ball receiving groove is formed with a master side inclined portion whose cross section taken lengthwise of the groove has a shape inclined opposite to the direction of inclination of the tool side inclined portion, said master side inclined portion pushing one corresponding said ball member against one corresponding said tool side inclined portion when the cam member is positioned in the locking position.

### Brief Description of Drawings

Figure **1** is a longitudinal cross-sectional view showing a robot arm coupling apparatus according to an embodiment of the present invention when both the plates are connected.
Figure **2** is a longitudinal cross-sectional view of the master plate.
Figure **3** is a longitudinal cross-sectional view of the tool plate.
Figure **4** is a cross-sectional view taken along the line IV-IV in Figure **5****.**
Figure **5** is an enlarged front view of a master side ball receiving groove when viewed from one side of a cam member.
Figure **6** is an enlarged plan view of the master side ball receiving groove when viewed from below the cam member.
Figure **7** is a cross-sectional view taken along the line VII-VII in Figure **9****.**
Figure **8** is a perspective view of the cam member.
Figure **9** is a plan view of the cam member when viewed from below.
Figure **10** is a plan view of a ball retainer when viewed from below.
Figure **11** is a perspective view of the ball retainer.
Figure **12** is a cross-sectional view taken along the line XII-XII in Figure **10****.**
Figure **13** is an enlarged front view of a tool side ball receiving groove when viewed from the inside of the ball retainer.
Figure **14** is an enlarged plan view of the tool side ball receiving groove when viewed from below the ball retainer.
Figure **15** is a cross-sectional view taken along the line XV-XV in Figure **13****.**
Figure **16** is a plan view of a master cylinder when viewed from below.
Figure **17** is an enlarged cross-sectional view of a ball accommodation hole.
Figure **18** is a view corresponding to Figure **4****,** showing another embodiment.

### Best Mode for Carrying Out the Invention

An embodiment of the present invention will be described below in detail with reference to the drawings. The following description of the preferred embodiment is merely illustrative in nature and is not at all intended to limit the scope, applications and use of the invention.

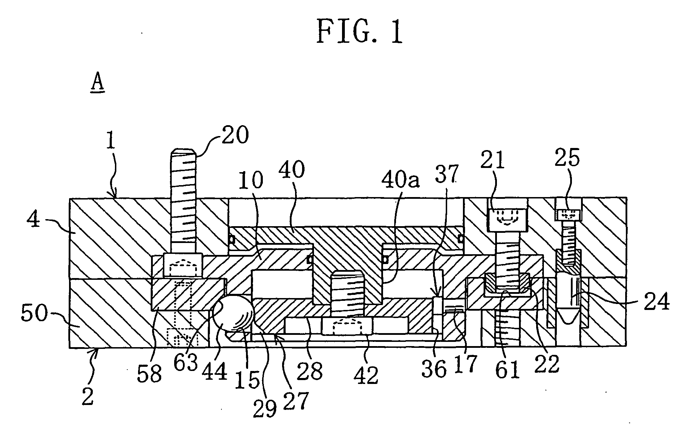

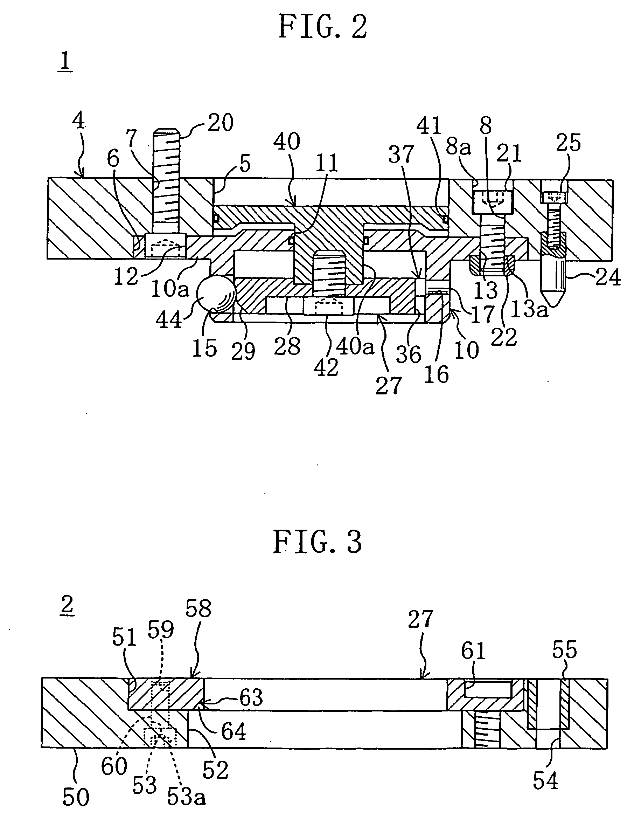

Figure 1 shows an essential part of a robot arm coupling apparatus **A** according to an embodiment of the present invention. This robot arm coupling apparatus **A** is for exchangeably mounting a tool or like element to an unshown robot arm and includes a mater plate **1** shown in Figure **2** and a tool plate **2** shown in Figure **3****.** The master plate **1** is attached to the robot arm and a tool or like element is attached to the tool plate **2.** Both the plates **1, 2** are configured to be quickly connected to and disconnected from each other by a locking mechanism **27.**

Though not shown, the master plate 1 and the tool plate **2** have a master connecter and a tool connector, respectively, attached thereto. In connecting both the plates **1, 2,** the master connecter and the tool connector are electrically connected to each other and the connection establishes an electric control system for controlling the tool. For convenience of explanation, the following description is given regarding the mater plate 1 and the tool plate 2 as placed above (on the robot arm side) and below, respectively.

The master plate 1 includes a master body **4** to be attached to the robot arm by first bolts **20** (first fastening members) and a cylinder head **10** integrally fixed to the bottom of the master body **4** by second bolts **21** (second fastening members) different from the first bolts **20** and having a plurality of ball accommodation holes **15, 15,** ... each for accommodating one of a plurality of ball members **44, 44,** ....

The master body **4** has a ring shape in which a small-diameter hole **5** located in an upper side thereof and a large-diameter hole **6** continuing concentrically to the small-diameter hole **5** to form a shoulder are formed through the center of the master body **4.** The shoulder between the small-diaineter hole **5** and the large-diameter hole 6 has a plurality of (e.g., eight) first bolt insertion holes **7, 7,** ... and a plurality of (e.g., eight) second bolt insertion holes **8, 8, ...** formed therethrough and alternated in the circumferential direction. An opening of each second bolt insertion hole **8** located at the top surface of the master body **4** is formed into a bolt head receiving part **8a** larger in diameter than the other part.

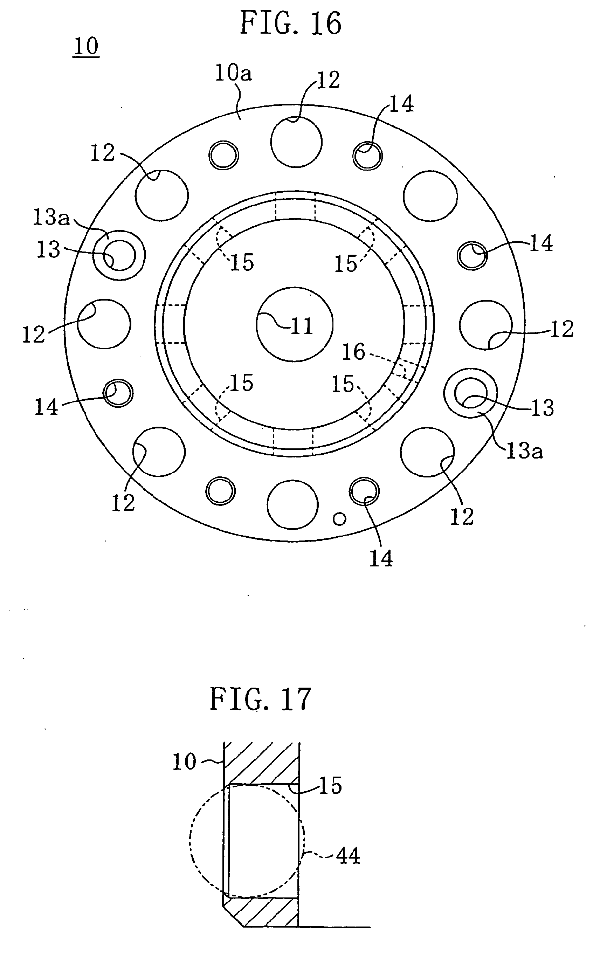

On the other hand, the cylinder head **10** is in the shape of a downwardly opening, bottomed cylinder, as also shown in Figure **16****,** and has a rod part insertion hole **11** formed therethrough at the center of the bottom. The upper end of the outer periphery of the cylinder head **10** is formed integrally with a flange **10a** which is fitted into the large-diameter hole **6** of the master body **4** so that the bottom surface of the flange **10a** is flush with the bottom surface of the master body **4.** The flange **10a** has bolt head receiving holes **12** formed through it at its positions corresponding to the first bolt insertion holes **7** in the master body **4** and having a larger diameter than the first bolt insertion holes **7,** has a pair of bolt insertion holes **13, 13** formed through it at its positions corresponding to a specified, diametrically opposed pair **8, 8** of the second bolt insertion holes **8, 8,** ... in the master body **4,** and has bolt screwing holes **14** formed through it at its positions corresponding to the remaining second bolt insertion holes **8.** An opening of each bolt insertion hole **13** at the bottom surface of the cylinder head **10** is formed into a pin receiving part **13a** having a larger diameter than the other part thereof.

The flange **10a** of the cylinder head **10** is fitted into the large-diameter hole **6** of the master body **4** and, in this state, the first bolts **20** are inserted from below the cylinder head **10** into the bolt head receiving holes **12** in the flange **10a** and the first bolt insertion holes **7** in the master body **4,** thereby projecting the distal ends (upper ends) of the first bolts **20** upward beyond the master body **4.** The projecting portions of the first bolts **20** are screwed and tightened into the robot arm, whereby the master body **4** is fixed integrally to the robot arm in gas-tight manner. On the other hand, the second bolts **21** are inserted from above the master body **4** into the second bolt insertion holes 8 in the master body **4.** Out of the second bolts **21,** a pair of second bolts **21, 21** are inserted into the bolt insertion holes **13** in the flange **10a** so that their distal ends (lower ends) pass through them to project below beyond the flange **10a.** The projecting portions of the second bolts **21, 21** are screwed and tightened into positioning pins **22.** The rest of the second bolts **21** are crewed and tightened at their distal ends (lower ends) into the bolt screwing holes **14** in the flange **10a.** In this manner, the cylinder head **10** is fixed integrally to the master body **4** in gas-tight manner by the second bolts **21.** The heads of the second bolts **21** are received in bolt head receiving parts **8a** of the second bolt insertion holes **8** in the master body **4** against projecting beyond the top surface of the master body **4,** while the heads of the first bolts **20** are received in bolt head receiving holes **12** in the cylinder head **10** against projecting beyond the bottom surface of the flange **10a.** Furthermore, when the master body **4** is attached to the robot arm, the upper opening of the small-diameter hole **5** is closed in gas-tight manner so that a closed cylinder space is created by the small-diameter hole **5,** the top surface of the cylinder head **10** and the robot arm.

The positioning pins **22** screwed onto the lower ends of the pair of second bolts **21, 21** (second fastening members) act also as fastening nuts and are screwed onto the second bolts **21, 21** with their upper portions received in pin receiving parts **13a** of the bolt insertion holes **13** and their lower portions projecting beyond the bottom surface of the flange **10a.** Each positioning pin **22** is formed in the shape of a short cylinder of relatively large diameter in which the corners of the lower end are rounded to form arcuate surfaces.

At part of the bottom surface of the master body **4** outwardly of the large-diameter hole **5,** a pair of guide pins **24, 24** for robot teaching with their distal ends (lower ends) tapered are attached oppositely in the diametrical direction of the master cylinder so that their lower portions are projected beyond the bottom surface of the master body **4.** Each guide pin **24** is fixed to the master body **4** by a mounting bolt **25** passing therethrough.

The lower part of the cylinder head **10** has the plurality of (e.g., eight) ball accommodation holes **15, 15,** ... formed at circumferentially spaced intervals to radially pass through the cylinder head **10** from inside to outside and has a single pin hole **16** formed between specified two ball accommodation holes **15, 15** to radially pass through the cylinder head **10** from inside to outside. A rotation stop pin **17** is inserted and fixed in the pin hole **16** with its part (engagement part) projecting to the interior of the cylinder head **10.** As shown in Figure **17** in enlarged manner, the open end of each ball accommodation hole **15** at the outer periphery of the cylinder head **10** has a smaller diameter than the other part, whereby the ball member **44** in the ball accommodation hole **15** is held against dropping out of the hole beyond the outer periphery of the cylinder head **10.**

The locking mechanism **27** includes a cam member **28** supported to the master plate 1 slidably between its locking position and unlocking position, the plurality of ball members **44, 44, ...** arranged around the cam member **28** and supported to the master plate **1** movably along a direction (radial direction) substantially orthogonal to the sliding direction of the cam member **28** (the vertical direction), and a ball retainer **58** disposed at the tool plate **2** and engageable with the ball members **44** to hold both the plates **1** and **2** connected to each other when the cam member **28** moves to the locking position.

Each ball member **44** is constituted, for example, by a steel ball having a diameter of 12.7 mm (radius r = 6.35 mm) and accommodated and retained in the corresponding ball accommodation hole **15** in the cylinder head **10** movably along the radial direction of the master plate 1.

Furthermore, a piston **40** is slidably inserted and fitted in the small-diameter hole **5** (the cylinder space) of the master body **4.** The piston **40** is in the shape of a disc slidable in the small-diameter hole **5** through a sealing member **41** constituted by an O-ring. The piston **40** has a rod part **40a** integrally extending from the center of the bottom surface and slidably passing through the rod part insertion hole 11 in the cylinder head **10** in gas-tight manner. The piston **40** divides the interior (cylinder space) of the small-diameter hole **5** in the master body **4** into two rooms from top to bottom and is configured to reciprocate within the small-diameter hole **5** by selectively supplying pressurized air to one of the rooms through an air passage (not shown) formed in the master body **4.**

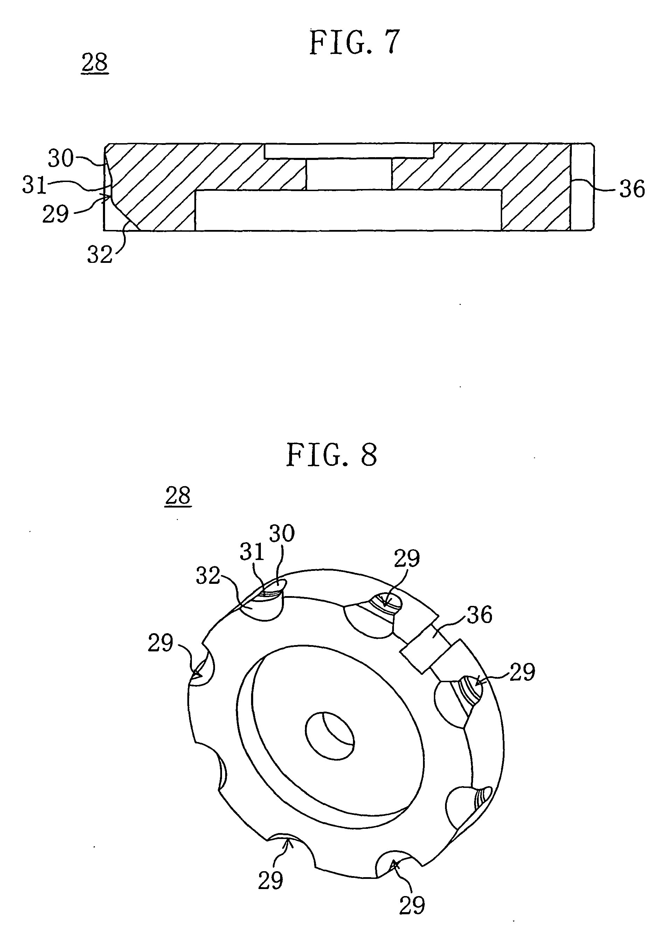

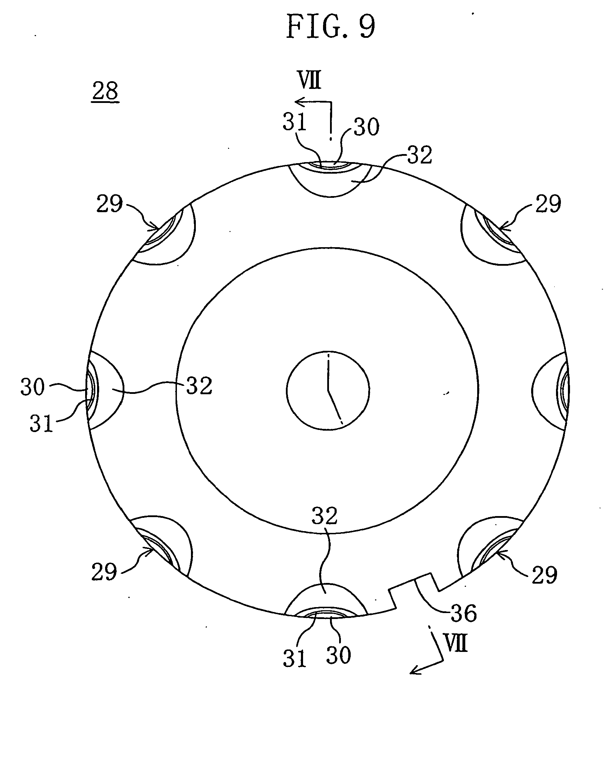

The cam member **28** is placed in the cylinder head **10** slidably between its locking position located at the descending end and its unlocking position located at the ascending end. As shown in Figures **7** to **9****,** the cam member **28** is in the shape of a disc and fastened at the center to the distal end (lower end) of the rod part **40a** of the piston **40** for unitary movement by a connecting bolt **42.** When the piston **40** reciprocates, the cam member **28** is actuated to slide in the cylinder head **10** between the locking position and the unlocking position.

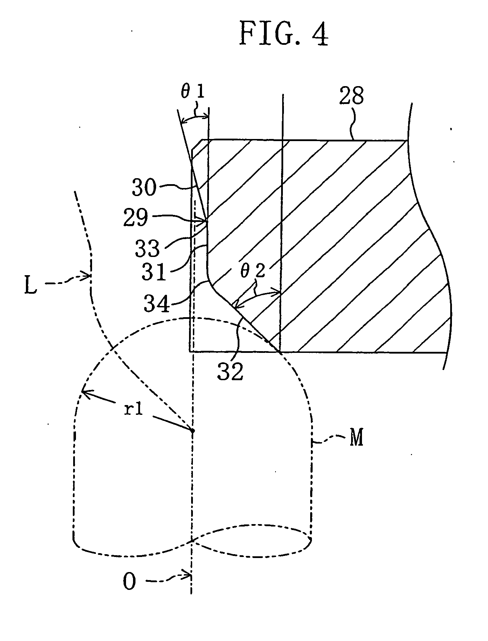

The outer periphery of the cam member **28** has a plurality of (e.g., eight) master side ball receiving grooves **29, 29,** ... of arcuate cross section formed arranged in the circumferential direction of the cam member **28** in correspondence with the positions of the ball members **44** (the positions of the ball accommodation holes **15** in the cylinder head **10).** As shown in Figures **4** to **6** in enlarged and detailed manner, each master side ball receiving groove **29** is shaped so that the corner of the cam member **28** at the lower end of the outer periphery is partly cut out in the shape of an arcuate groove. The master side ball receiving groove **29** generally extends along the sliding direction of the cam member **28** (the vertical direction) and has an upper end located not at the top surface of the cam member **28** but in the vicinity of the upper end of the outer periphery to be able to receive the corresponding ball member **44** in the master side ball receiving groove **29.** The master side ball receiving groove **29** may be formed so that its upper end reaches the top surface of the cam member **28.**

The inner surface (essentially, the bottom surface) of each master side ball receiving groove **29** is formed with a master side first inclined portion **30,** a straight portion **31** continuing to the master side first inclined portion **30** and located closer to the locking position of the cam member **28** (lower) than it, and a master side second inclined portion **32** continuing to the straight portion **31** and located closer to the locking position of the cam member **28** (lower) than it. The master side first inclined portion **30** and the straight portion **31** continue through an upper arcuate portion **33,** while the straight portion **31** and the master side second inclined portion **32** continue through a lower arcuate portion **34.** The first inclined portion **30,** the straight portion **31,** the second inclined portion **32** and the arcuate portions **33, 34** are all located in the inner surface (bottom surface) of the master side ball receiving groove **29.** Though each master side ball receiving groove **29** has the same groove radius **r1** at every point in the groove, it can be formed by changing its arc center. The formation of a master side ball receiving groove **29** of an arc radius of **r1** having such a shouldered groove bottom surface is easily implemented by using an end mill **M** having a head with a radius of **r1** to cut the cam member **28** while moving the center **O** of the end mill **M** along a specified locus **L.**

The master side first inclined portion **30** and the master side second inclined portion **32** each have a shape inclined oppositely to the direction of inclination of the later-described tool side inclined portion **64** so that their cross sections taken lengthwise of the groove go towards the center of the cam member **28** (to the right in Figure **4****)** with approach downward in the sliding direction of the cam member **28.** The angle **θ1** of inclination of the first inclined portion **30** with respect to the vertical direction (the vertical axis) may be equal to the angle θ**2** of inclination of the second inclined portion 32 (i.e., θ1 = θ2). In this embodiment, however, in order to enhance the wedge effect of the second inclined portion **32** and surely hold the connecting position even upon abrupt movement of the robot arm, the angle θ**1** of inclination of the first inclined portion **30** is set smaller than the angle θ**2** of inclination of the second inclined portion **32** (θ1 < θ2). For example, the angle θ**1** of inclination of the first inclined portion **30** is θ1 = 15°, while the angle θ**2** of inclination of the second inclined portion **32** is θ2 = 45°.

The straight portion **31** is shaped so that its cross section taken lengthwise of the groove is parallel with the sliding direction of the cam member **28,** and its angle of inclination with respect to the vertical direction (the vertical axis) is zero. Further, the upper arcuate portion **33** and the lower arcuate portion **34** are shaped so that their cross sections taken lengthwise of the groove each have a shape of a rounded arc. The upper arcuate portion **33** and the lower arcuate portion **34** bulge towards the center and the outer periphery, respectively, of the cam member **28** and, that is, the bulging directions of the arcuate portions **33** and **34** are opposite to each other. The upper arcuate portion **33** joins the master side first inclined portion **30** and the straight portion **31** to smoothly continue, while the lower arcuate portion **34** joins the straight portion **31** and the master side second inclined portion **32** to smoothly continue.

The outer periphery of the cam member **28** has an engagement groove **36,** for example, of rectangular cross section formed at a position corresponding to the pin hole **16** in the cylinder head **10** to extend along the sliding direction of the am member **28** and span the top and bottom surfaces of the cam member **28.** The engagement groove **36** is engaged with the engagement part of the rotation stop pin **17** inserted in the pin hole **16** to allow sliding motion of the engagement part. The rotation stop pin **17** and the engagement groove **36** constitute a rotation stop mechanism **37** for inhibiting the cam member **28** from rotating relative to the master plate **1** about the vertical axis along the sliding direction of the cam member **28.**

The tool plate **2** includes a tool body **50** attachable to a tool or like element and a ball retainer **58** fixed to the upper side of the tool body **50** and constituting part of the locking mechanism **27.** The tool body **50** has a ring shape in which an upper large-diameter hole **51** and a lower small-diameter hole **52** continuing concentrically to the large-diameter hole **51** to form a shoulder are formed through the center of the tool body **50.** The shoulder between the large-diameter hole **51** and the small-diameter hole **52** has a plurality of (e.g., 16) bolt insertion holes **53, 53,** ... formed therethrough at circumferentially spaced intervals. An opening of each second bolt insertion hole **53** located at the bottom surface of the tool body **50** is formed into a bolt head receiving part **53a** larger in diameter than the other part.

Furthermore, in part of the top surface of the tool body **50** outwardly of the large-diameter hole **51,** a pair of shouldered pin insertion holes **54, 54** are formed through the tool body **50** oppositely in the diametrical direction of the tool body **50** and in correspondence with the positions of the guide pins **24** of the master body **4.** A bush **55** having a larger inner diameter than the guide pin **24** is fixedly fitted in the upper part of each pin insertion hole **54.** In teaching the robot, each guide pin **24** is inserted and fitted into the bush **55** of the corresponding pin insertion hole **54.**

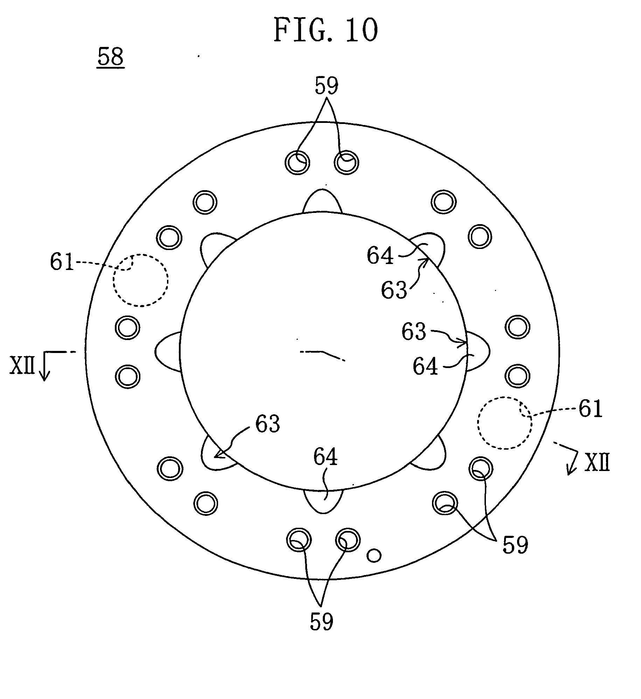

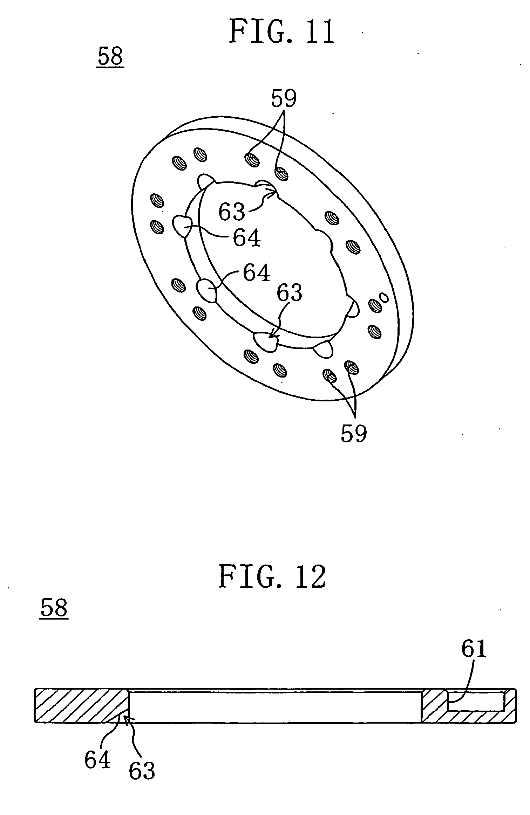

As also shown in Figures **10** to **12****,** the ball retainer **58** has a ring shape having a smaller inner diameter than the small-diameter hole **52** in the tool body **50** and is fitted into the large-diameter hole **51** of the tool body **50** so that its top surface is flush with the bottom surface of the tool body **50.** The ball retainer **58** has bolt screwing holes **59** formed through it at its positions corresponding to the bolt insertion holes **53** in the tool body **50.** The ball retainer **58** is fitted into the large-diameter hole **51** in the tool body **50,** fastening bolts **60** are inserted from below the tool body **50** into the bolt insertion holes **53** in the tool body **50** and their distal ends (upper ends) are screwed and tightened into the corresponding bolt screwing holes **59** in the ball retainer **58,** whereby the ball retainer **58** is fixed integrally to the tool body **50.**

Furthermore, the top surface of the ball retainer **58** has a pair of positioning fitting holes **61** formed oppositely in the diametrical direction and each constituted by a shallow, bottomed hole fittable on the positioning pins **22** on the master plate **1.** In connecting the tool plate **2** to the master plate **1,** the positioning pins **22** are fitted into the positioning fitting holes **61,** whereby the ball members **44** in the corresponding ball accommodation holes **15** of the cylinder head **10** (and the master side ball receiving grooves **29** in the cam member **28)** are positioned circumferentially corresponding to the later-described tool side ball receiving grooves **63** in the ball retainer **58.**

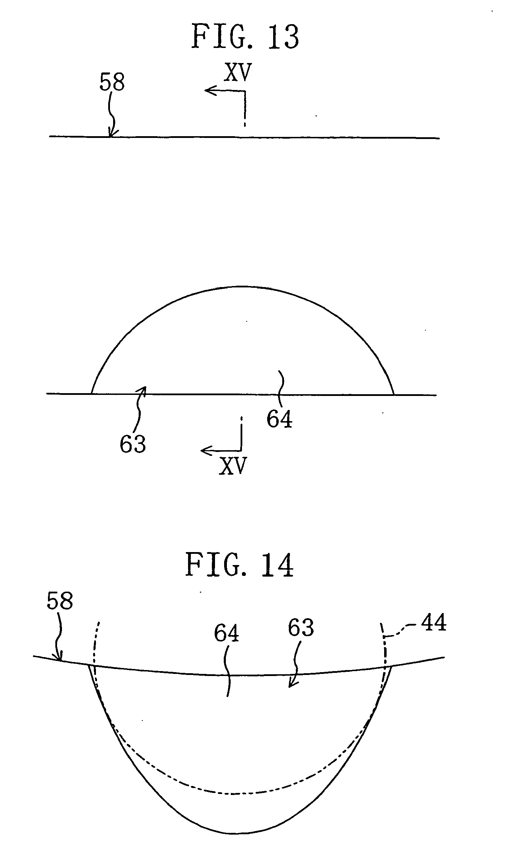

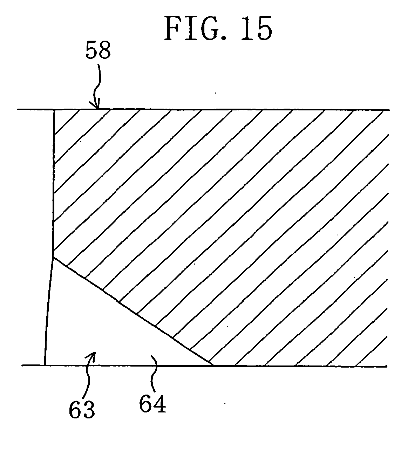

The lower part of the inner periphery of the ball retainer **58** has a plurality of (e.g., eight) tool side ball receiving grooves **63, 63,** ... of arcuate cross section formed arranged in the circumferential direction of the ball retainer **58** in correspondence with the positions of the ball members **44** of the master plate **1** (the positions of the master side ball receiving grooves **29** in the cam member **28).** As shown in Figures **13** to **15** in enlarged and detailed manner, each tool side ball receiving groove **63** is shaped so that the corner of the ball retainer **58** at the lower end of the inner periphery is partly cut out in the shape of an arcuate groove. The tool side ball receiving groove **63** generally extends along the sliding direction of the cam member **28** (the vertical direction) and has an upper end located not at the top surface of the ball retainer **58** but in the vicinity of the top end of the inner periphery to be able to receive the corresponding ball member **44** in the tool side ball receiving groove **63.** The arc radius **r1** of the tool side ball receiving groove **63** is equal to the arc radius **r1** of the master side ball receiving groove **29** (but both the ball receiving grooves **63, 29** may have different arc radii). The tool side ball receiving groove **63** may be formed so that its upper end reaches the top surface of the ball retainer **58.**

The inner surface (essentially, the bottom surface) of each tool side ball receiving groove **63** is formed with a tool side first inclined portion **64.** The tool side first inclined portion **64** is shaped so that its cross section taken lengthwise of the groove inclines oppositely to the direction of inclination of the master side first inclined portion **30** of the master side ball receiving groove **29,** i.e., inclines to go towards the center of the ball retainer **58** with approach upward in the sliding direction of the cam member **28.** Like the master side ball receiving groove **29,** the tool side ball receiving groove **63** also has the same groove radius **r1** at every point in the groove and can be formed by changing its arc center. The formation of a tool side ball receiving groove **63** of an arc radius of **r1** having such a groove bottom surface is easily implemented by using the end mill **M** to cut the ball retainer **58** in the same manner as in the formation of the master side ball receiving groove **29.**

The radius **r1** of the master side ball receiving groove **29** and the tool side ball receiving groove **63** preferably ranges from 0.05 mm larger than the radius **r** (0.1 mm larger than the diameter) of the ball member **44** to twice larger than the radius (i.e., 0.05 mm + r ≤ r1 ≤ 2r). The reason for this is as follows: if r1 < 0.05 mm + r, this does not ensure that the ball member **44** smoothly rolls on the ball receiving groove **29, 63;** if r1 > 2r, this does not provide a good surface-pressure reducing effect between the inner surface of each ball receiving groove **29, 63** and the outside surface of the ball member **44.** More preferably, the upper limit of the radius **r1** of the ball receiving groove **29, 63** is not 1.5 times larger than the radius r of the ball member **44** (0.05 mm + r ≤ r1 ≤ 1.5r).

When the cylinder head **10** of the master plate **1** is inserted and fitted into the inside of the ball retainer **58** and the small-diameter hole **52** of the tool body **50** of the tool plate **2** and the positioning pins **22** are fitted and engaged into the positioning fitting holes **61,** the ball members **44** of the master plate **1** are associated with the tool side ball receiving grooves **63** in the ball retainer **58.** When in this state the piston **40** is actuated to position the cam member **28** into the locking position, the master side first inclined portions **30** at the upper ends of the master side ball receiving grooves **29** press the ball members **44** against the tool side inclined portions **64** of the tool side ball receiving grooves **63,** thereby joining and locking the tool plate **2** and the master plate **1** together.

Next, a description is given of the operation of this embodiment. First, in connecting the tool plate **2** to the master plate **1,** the robot arm is operated to insert the cylinder head **10** of the master plate **1** into the interior of the ball retainer **58** and the small-diameter hole **52** of the tool body **50** of the tool plate **2.** Further, the pair of positioning pins **22, 22** on the master plate **1** are fitted into the pair of positioning fitting holes **61, 61** in the tool plate **2.** In this state, the ball members **44** supported in the corresponding ball accommodation holes **15** in the cylinder head **10** are circumferentially associated with the corresponding tool side ball receiving grooves **63** in the ball retainer **58.** The ball members **44** are also circumferentially associated with the corresponding master side ball receiving grooves **29** in the cam member **28** by the rotation stop mechanism **37.**

When in this state pressurized air is supplied to the room above the piston **40,** the piston **40** moves down from its rising position and this actuation of the piston **40** causes the cam member **28** to move down from the unlocking position located at its ascending end. The downward movement of the cam member **28** causes the ball members **44** to enter the master side ball receiving grooves **29,** whereby the master side second inclined portion **32** at the lower end of the inner surface of each ball receiving groove **29** pushes the corresponding ball member **44** radially outward to project it from the outer periphery of the cylinder head **10.** Thus, the projecting portion of each ball member **44** enters the corresponding tool side ball receiving groove **63.** When the cam member **28** further moves down, the straight portion **31** above the master side second inclined portion **32** pushes the ball member **44.** Then, when the cam member **28** is positioned in the locking position at its descending end, the master side first inclined portion **30** located above the straight portion **31** and at the upper end of the master side ball receiving groove **29** pushes the ball member **44,** whereby the ball member **44** abuts against the tool side inclined portion **64** of the corresponding tool side ball receiving groove **63.** In this state, each ball member **44** abuts against the master side first inclined portion **30** of the corresponding master side ball receiving groove **29** and the tool side inclined portion **64** of the corresponding tool side ball receiving groove **63** and the lower part of the inner surface of the corresponding ball accommodation hole **15** and is held pushed against movement by them. Thus, the tool plate **2** and the master plate **1** are joined and locked together.

Specifically, in this case, the air pressure acts on the top surface of the piston **40** and the cam member **28** integral with the piston **40** is also pushed down, so that the master side first inclined portion **30** at the upper end of the inner surface of each master side ball receiving groove **29** pushes the outer periphery of the corresponding ball member **44.** Therefore, by a so-called wedge effect of the master side first inclined portion **30,** the corresponding ball member **44** is moved radially outward until it reaches a specified position. In addition, since the angle θ**1** of inclination of the master side first inclined portion **30** is small, the wedge effect is enhanced. Therefore, the tool plate **2** is urged upward by a pressing force acting from the ball members **44** on the tool side inclined portions **64** of the tool side ball receiving grooves **63** in the ball retainer **58,** so that the top surface of the tool plate **2** moves until it reaches the bottom surface of the master plate **1.** Even if, as a result, a gap is created between both the plates **1** and **2** owing to processing irregularities, such irregularities are absorbed by positively urging the ball members **44** radially outward by the master side first inclined portions **30** of the master side ball receiving grooves **29** to displace the tool plate **2** upward. Therefore, both the plates **1** and **2** are joined together with no gap created therebetween, which improves the reproducibility of their connecting position.

The top surface of the piston **40** always undergoes air pressure. If, however, the top surface of the piston **40** no longer undergoes air pressure for any reason, the ball members **44** are pushed and displaced radially inward by the weights of the tool plate **2** and the tool, whereby the piston **40** is lifted up. Even in this case, since the straight portion **31** are joined to the lower end of the master side first inclined portion **30,** a force in a direction to raise the piston **40** does not act on the piston **40** from the ball members **44** after each ball member **44** moves to the straight portion **31.** This restrains improper separation between both the plates **1** and **2.**

In disconnecting the tool plate **2** from the master plate **1,** pressurized air is supplied to the room below the piston **40** to raise the piston **40,** so that an inverse operation with respect to the connecting of them is performed. Thus, the ball members **44** move radially inward to disconnect both the plates **1** and **2** from each other.

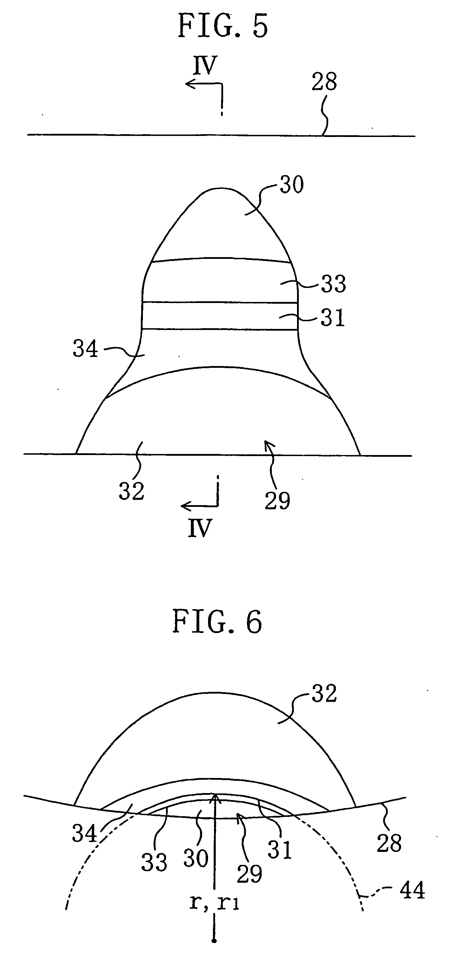

In this embodiment, each ball member **44** moves while being received in the corresponding master side ball receiving groove **29** of arcuate cross section in the cam member **28** and the corresponding, similar tool side ball receiving groove **63** in the ball retainer **58.** Therefore, as shown in Figures **6** and **14****,** each ball member **44** comes into contact with the inner surfaces (essentially, the bottom surfaces) of the corresponding master side ball receiving groove **29** and tool side ball receiving groove **63.** The contact is a contact of the outer periphery of the ball member **44** with the inner surfaces of the ball receiving grooves **29** and **63,** i.e., a contact between the arcuate surfaces curved in the same direction. In this case of contact between the arcuate surfaces, the contact area increases as compared to the contact configuration of the ball member **44** with the master side tapered surface in the outer periphery of the conventional cam member and the too side tapered surface in the inner periphery of the conventional ball retainer, i.e., the contact configuration between their arcuate surfaces curved in opposite directions. Therefore, even with the use of the small-diameter ball members **44,** the contact area can be increased to reduce the contact surface pressure. This makes it possible for the ball members **44** to have a smaller diameter, thereby making the operating stroke of the cam member **28** smaller and, in turn, making the thickness (height) of the robot arm coupling apparatus A thinner.

Furthermore, since the first bolts **20** used to attach the master body **4** to the robot arm are different from the second bolts **21** used to attach the cylinder head **10** to the master body **4,** only the master body **4** can be attached to the robot arm with the first bolts **20.** As compared to the structure in which the master body **4** and the cylinder head **10** are together attached to the robot arm with common bolts, the robot arm coupling apparatus **A** can be made thinner and can keep a large strength.

Furthermore, the rotation of the cam member **28** is inhibited by the rotation stop mechanism **37.** Therefore, not only when the cam member **28** is in the locking position but also when it is in the unlocking position, the master side ball receiving groove **29** in the cam member **28** can be associated one with each of the ball members **44** (or each of the ball accommodation holes **15** in the cylinder head **10)** and the ball members **44** can be received in the master side ball receiving grooves **29.** This provides the retention of stable operation.

Furthermore, a short, large-diameter, cylindrical pin is used as each positioning pin **22** of the master plate **1.** Therefore, even if torsional moment acts on the positioning pin **22,** it is not largely displaced, which provides a stable positioning. Since the positioning fitting hole **61** in the tool plate **2** is a shallow, bottomed hole, this ensures that the positioning mechanism has a large strength.

If the positioning pin **22** is short as in the above case, it might be difficult to teach the robot. However, since the master body **4** is provided with the guide pins **24** for teaching in addition to the positioning pins **22,** the robot teaching can be easily carried out using the guide pins **24.**

### (Other Embodiments)

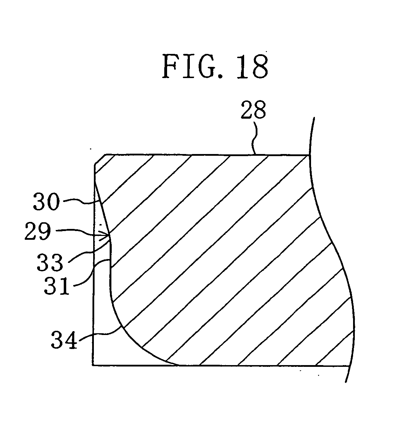

In the above embodiment, in each master side ball receiving groove **29,** the straight portion **31** and the master side second inclined portion **32** smoothly continue through the rounded arcuate portion **34.** As shown in Figure **18****,** however, the master side second inclined portion **32** may be eliminated and the rounded arcuate portion **34** may be smoothly joined to the straight portion **31** at a position closer to the locking position of the cam member **28** than the straight portion **31** to incline substantially in the same direction as the direction of inclination of the master side first inclined portion **30.** This also provides the same effects as in the above embodiment.

Furthermore, in the above embodiment, the first inclined portion **30,** the straight portion **31,** the second inclined portion **32** and the arcuate portions **33** and **34** are formed in each master side ball receiving groove **29.** However, only the first inclined portion **30** may be formed therein and the other portions may be eliminated.

### (Examples)

The following Table 1 shows measurement results of decreasing changes in surface pressure between the outer periphery of a ball member **44** and the surface of each of corresponding ball receiving grooves **29, 63** where the radii r1 of both the ball receiving grooves **29, 63** are changed in a particular relation with the radius r of the ball member **44,** and indicates the rates of surface pressure reduction of Inventive Examples when Comparative Example 1 has a rate of surface pressure reduction of 100%. The groove radii are r1 = r + 0.05 mm for Inventive Example 1, r1 = 1.25r for Inventive Example 2, r1 = 1.50r for Inventive Example 3, r1 = 1.75r for Inventive Example 4, and r1 = 2.00r for Inventive Example 5. Further, Comparative Example 1 has a contact configuration in which the ball members come into contact with the master side tapered surface in the outer periphery of the cam member and the tool side tapered surface in the inner periphery of the ball retainer, i.e., a contact configuration in which the arcuate surfaces curved in opposite direction come into contact. Comparative Example 2 has a contact configuration in which the ball members come into contact not with arcuate surfaces but with flat surfaces (where they are inclined cam surfaces).

**Table 1**

| | | Comparative Example | | Inventive Example | | | | |
|---|---|---|---|---|---|---|---|---|
| Ball radius r (mm) | Rate of surface pressure reduction (%) | 1 | 2 | 1 | 2 | 3 | 4 | 5 |
| | | - | - | r + 0.05 mm | 1.25r | 1.50r | 1.75r | 2.00r |
| 5.5 | master side | 100 | 92 | 38 | 56 | 64 | 70 | 73 |
| | tool side | 100 | 105 | 43 | 64 | 74 | 80 | 84 |
| 6.35 | master side | 100 | 92 | 38 | 56 | 64 | 70 | 74 |
| | tool side | 100 | 105 | 43 | 64 | 73 | 80 | 84 |
| 7.5 | master side | 100 | 93 | 38 | 57 | 65 | 71 | 74 |
| | tool side | 100 | 105 | 43 | 64 | 73 | 80 | 84 |
| 10 | master side | 100 | 94 | 38 | 57 | 65 | 72 | 75 |
| | tool side | 100 | 104 | 42 | 63 | 73 | 79 | 83 |
| 12 | master side | 100 | 93 | 38 | 57 | 65 | 71 | 75 |
| | tool side | 100 | 105 | 43 | 64 | 73 | 80 | 84 |

Consideration of the results of Table 1 shows that Inventive Examples 1 to 5 each exhibited reduction in surface pressure between the ball member and the inner surface of the ball receiving groove in contrast to Comparative Example 1, smaller radii r1 of the ball receiving groove provide larger degrees of surface pressure reduction, and the groove surface of r1 = r + 0.05 mm as in Inventive Example 1 exhibited the smallest surface pressure. In the case of r1 = 2.00r as in Inventive Example 5, the surface pressure reduces down to 84%. Particularly, r1 = 1.50r as in Inventive Example 3 is practically preferable.

Table 2 shows measurement results of rate of increase in pressing load on the ball member when the surface pressures of the grooves in Inventive Examples become equal to those in Comparative Example 1 through reverse operation from the surface pressures in Table 1.

**Table 2**

| Ball radius r (mm) | Rate of load increase (%) | Inventive Example | | | |
|---|---|---|---|---|---|
| | | 2 | 3 | 4 | 5 |
| | | 1.25r | 1.50r | 1.75r | 2.00r |
| 5.5 | master side | 571 | 381 | 291 | 252 |
| | tool side | 377 | 251 | 192 | 167 |
| 6.35 | master side | 559 | 375 | 287 | 249 |
| | tool side | 377 | 253 | 193 | 167 |
| 7.5 | master side | 545 | 366 | 280 | 243 |
| | tool side | 381 | 256 | 196 | 169 |
| 10 | master side | 531 | 357 | 272 | 235 |
| | tool side | 391 | 262 | 201 | 174 |
| 12 | master side | 538 | 361 | 277 | 239 |
| | tool side | 382 | 256 | 197 | 170 |

Reference to Table 2 shows that where the radius r1 of each of the ball receiving grooves 29 and 63 is 1.5 times larger than the radius r of the ball member **44** (r1 = 1.5r), this makes it possible to push (place load on) the ball member **44** with a force of approximately 250% with respect to that of Comparative Example 1.

Furthermore, measurement was made in terms of rate of reduction of radius r of the ball member **44** when the surface pressure of the ball member **44** in contact with the ball receiving grooves **29** and **63** becomes equal to that in Comparative Example 1. The results shown in Table 3 was obtained.

**Table 3**

| Rate of reduction of ball radius | | | Comparative Example 1 | Inventive Example | | | |
|---|---|---|---|---|---|---|---|
| | | | | 2 | 3 | 4 | 5 |
| | | | | 1.25r | 1.50r | 1.75r | 2.00r |
| 1 | master side | ball diameter (mm) | 11 | 4.62 | 5.64 | 6.44 | 6.92 |
| | | rate (%) | 100 | 42.0 | 51.3 | 58.5 | 62.9 |
| | tool side | ball diameter (mm) | 11 | 5.68 | 6.94 | 7.94 | 8.53 |
| | | rate (%) | 100 | 51.6 | 63.1 | 72.2 | 77.5 |
| 2 | master side | ball diameter (mm) | 12.7 | 5.36 | 6.57 | 7.51 | 8.06 |
| | | rate (%) | 100 | 42.2 | 51.7 | 59.1 | 63.5 |
| | tool side | ball diameter (mm) | 12.7 | 6.54 | 8.00 | 9.14 | 9.82 |
| | | rate (%) | 100 | 51.5 | 63.0 | 72.0 | 77.3 |
| 3 | master side | ball diameter (mm) | 15 | 6.42 | 7.85 | 8.96 | 9.65 |
| | | rate (%) | 100 | 42.8 | 52.3 | 59.7 | 64.3 |
| | tool side | ball diameter (mm) | 15 | 7.68 | 9.38 | 10.74 | 11.54 |
| | | rate (%) | 100 | 51.2 | 62.5 | 71.6 | 76.9 |
| 4 | master side | ball diameter (mm) | 20 | 8.68 | 10.60 | 12.12 | 13.04 |
| | | rate (%) | 100 | 43.4 | 53.0 | 60.6 | 65.2 |
| | tool side | ball diameter (mm) | 20 | 10.10 | 12.34 | 14.12 | 15.16 |
| | | rate (%) | 100 | 50.5 | 61.7 | 70.6 | 75.8 |
| 5 | master side | ball diameter (mm) | 24 | 10.34 | 12.62 | 14.45 | 15.50 |
| | | rate (%) | 100 | 43.1 | 52.6 | 60.2 | 64.6 |
| | tool side | ball diameter (mm) | 24 | 12.26 | 14.98 | 17.11 | 18.41 |
| | | rate (%) | 100 | 51.1 | 62.4 | 71.3 | 76.7 |

Reference to Table 3 shows that where the radius r1 of each of the ball receiving grooves **29** and **63** is 1.5 times larger than the radius r of the ball member **44** (r1 = 1.5r), this makes it possible to use a ball member **44** with a smaller diameter of approximately 65% with respect to that of Comparative Example 1 when the surface pressure is the same as in Comparative Example 1.

As can be seen from the above results, according to the technique of the present invention, thinning of the robot arm coupling apparatus can be effectively achieved.

### Industrial Applicability

The present invention has a high industrial applicability in that thinning of the robot arm coupling apparatus can be promoted using ball members.

## Claims

1. A robot arm coupling apparatus (A) comprising: a master plate (1) attachable to a robot arm; a tool plate (2) to which a tool or like element is attachable; and a locking device for joining and locking both the plates together, said locking device including: a cam member (28) supported on the master plate (1) slidably between a locking position and an unlocking position; a plurality of ball members (44) arranged around the cam member (28) and supported in ball accommodation holes (15) of the master plate (1) for movement substantially orthogonal to a sliding direction of the cam member (28); and a ball retainer (58) disposed at the tool plate (2) and engageable with the ball members (44) to hold both the plates connected to each other when the cam member (28) moves to the locking position, wherein
the cam member (28) has a plurality of master side ball receiving grooves (29) of substantially arcuate cross section formed to extend substantially along the sliding direction of the cam member (28) and each capable of receiving one corresponding said ball member (44), said master side ball receiving grooves (29) being spaced in the circumferential direction of the cam member (28) in correspondence with the positions of the ball members (44),
the ball retainer (58) has a plurality of tool side ball receiving grooves (63) of substantially arcuate cross section formed to extend substantially along the sliding direction of the cam member (28) and each capable of receiving one corresponding said ball member (44), said tool side ball receiving grooves (63) being spaced in the circumferential direction of the ball retainer (58) in correspondence with the positions of the ball members (44),
the inner surface of each said master side ball receiving groove is formed with a master side first inclined portion (30) whose cross section taken lengthwise of the groove has a shape inclined in a specified direction with respect to the sliding direction of the cam member (28), a straight portion (31) located closer to the locking position of the cam member (28) than the master side first inclined portion (30) and joined to the master side first inclined portion (30), the cross section of said straight portion (31) taken lengthwise of the groove being parallel to the sliding direction of the cam member (28), and a master side second inclined portion (32) located closer to the locking position of the cam member (28) than the straight portion (31), the cross section of said master side second inclined portion (32) taken lengthwise of the groove being inclined in the same direction as the direction of inclination of the master side first inclined portion (30),
the master side first inclined portion (30) and the straight portion (31) continue through an upper arcuate portion (33) whose cross section taken lengthwise of the groove is arcuate and the straight portion (31) and the master side second inclined portion (32) continue through an lower arcuate portion (34) whose cross section taken lengthwise of the groove is arcuate,
the inner surface of each said tool side ball receiving groove (63) is formed with a tool side inclined portion (64) whose cross section taken lengthwise of the groove has a shape inclined opposite to the direction of inclination of the master side first inclined portion (30), and
the robot arm coupling apparatus (A) is configured so that when the cam member (28) is positioned in the locking position, each said master side first inclined portion (30) pushes one corresponding said ball member (44) against one corresponding said tool side inclined portion (64).

2. The robot arm coupling apparatus (A) of claim 1, wherein the radius (r1) of each said master side ball receiving groove (29) and/or each said tool side ball receiving groove (64) ranges from 0.05 mm larger to twice larger than the radius (r) of each said ball member (44).

3. The robot arm coupling apparatus (A) of claim 1, wherein the radius (r1) of each said master side ball receiving groove (29) and/or each said tool side ball receiving groove (64) ranges from 0.05 mm larger to 1.5 times larger than the radius (r1) of each said ball member.

4. The robot arm coupling apparatus (A) of claim 1, further comprising a rotation stop mechanism for inhibiting the cam member (28) from rotating relative to the master plate (1) about an axis along the sliding direction of the cam member (28).

5. The robot arm coupling apparatus (A) of claim 1, wherein the master plate (1) comprises a master body (4) to be attached to the robot arm by a first fastening member (20) and a cylinder head (10) fixed to the master body (4) by a second fastening member (21) different from the first fastening member (20) and having a ball accommodation part for accommodating the ball members (44).

6. A master plate (1) for a robot arm coupling apparatus (A), said master plate (1) being attachable to a robot arm and connectable to a tool plate (2) including a ball retainer (58), wherein
the ball retainer (58) is formed with a plurality of tool side ball receiving grooves (63) of substantially arcuate cross section, the inner surface of each said tool side ball receiving groove (63) having a tool side inclined portion (64) whose cross section taken lengthwise of the groove has a shape inclined in a specified direction,
the master plate (1) comprises:
a cam member (28) slidable between a locking position and an unlocking position; and
a plurality of ball members (44) arranged around the cam member (28) with being supported in ball accommodation holes (15) for movement substantially orthogonal to a sliding direction of the cam member (28), said ball members (44) being configured, upon movement of the cam member (28) to the locking position, to come into contact with the corresponding tool side inclined portions (64) of the ball retainer (58) and hold the tool plate (2) connected to the master plate (1),
the cam member (28) has a plurality of master side ball receiving grooves (29) of substantially arcuate cross section formed to extend substantially along the sliding direction of the cam member (28) and each capable of receiving one corresponding said ball member (44), said master side ball receiving grooves (29) being spaced in the circumferential direction of the cam member (28) in correspondence with the positions of the ball members (44), and
the inner surface of each said master side ball receiving groove (29) is formed with a master side first inclined portion (30) whose cross section taken lengthwise of the groove has a shape inclined opposite to the direction of inclination of the tool side inclined portion (64), said master side first inclined portion (30) pushing one corresponding said ball member (44) against one corresponding said tool side inclined portion (64) when the cam member (28) is positioned in the locking position, a straight portion (31) located closer to the locking position of the cam member (28) than the master side first inclined portion (30) and joined to the master side first inclined portion (30), the cross section of said straight portion (31) taken lengthwise of the groove being parallel to the sliding direction of the cam member (28), and a master side second inclined portion (32) located closer to the locking position of the cam member (28) than the straight portion (31), the cross section of said master side second inclined portion (32) taken lengthwise of the groove being inclined in the same direction as the direction of inclination of the master side first inclined portion (30), and
the master side first inclined portion (31) and the straight portion continue through an upper arcuate portion (33) whose cross section taken lengthwise of the groove is arcuate and the straight portion (31) and the master side second inclined portion (32) continue through an lower arcuate portion (34) whose cross section taken lengthwise of the groove is arcuate.

7. The robot arm coupling apparatus (A) of claim 1 used for a robot for handling a work to move it from one pressing machine to another in a pressing process on a vehicle production line.

8. A vehicle manufacturing method comprising using the robot arm coupling apparatus (A) of claim 1 to handle a work to move it from one pressing machine to another in a pressing process on a vehicle production line.

## Patentansprüche

1. Roboterarmkopplungsvorrichtung (A), welche umfasst: eine Masterplatte (1), die an einem Roboterarm anbringbar ist; eine Werkzeugplatte (2), an der ein Werkzeug oder ähnliches Element anbringbar ist; und eine Verriegelungsvorrichtung zum Verbinden und Verriegeln beider Platten miteinander, wobei die Verriegelungsvorrichtung umfasst: ein Nockenelement (28), das auf der Masterplatte (1) gleitend zwischen einer Verriegelungsposition und einer Entriegelungsposition gelagert ist; mehrere Kugelelemente (44), die um das Nockenelement (28) angeordnet und in Kugelaufnahmelöchern (15) der Masterplatte (1) zur Bewegung im Wesentlichen orthogonal zu einer Gleitrichtung des Nockenelements (28) gelagert sind; und eine Kugelhalterung (58), die an der Werkzeugplatte (2) angeordnet ist und mit den Kugelelementen (44) in Eingriff treten kann, um beide Platten miteinander verbunden zu halten, wenn sich das Nockenelement (28) zu der Verriegelungsposition bewegt, wobei
das Nockenelement (28) mehrere masterseitige Kugel aufnehmende Nute (29) von im Wesentlichen bogenförmigem Querschnitt aufweist, die so ausgebildet sind, dass sie sich im Wesentlichen entlang der Gleitrichtung des Nockenelements (28) erstrecken, und jeweils in der Lage sind, ein entsprechendes Kugelelement (44) aufzunehmen, wobei die masterseitigen Kugel aufnehmenden Nute (29) in der Umfangsrichtung des Nockenelements (28) korrespondierend zu den Positionen der Kugelelemente (44) beabstandet sind,
die Kugelhalterung (58) mehrere werkzeugseitige Kugel aufnehmende Nute (63) von im Wesentlichen bogenförmigem Querschnitt aufweist, die so ausgebildet sind, dass sie sich im Wesentlichen entlang der Gleitrichtung des Nockenelements (28) erstrecken, und jeweils in der Lage sind, ein entsprechendes Kugelelement (44) aufzunehmen, wobei die werkzeugseitigen Kugel aufnehmenden Nute (63) in der Umfangsrichtung der Kugelhalterung (58) korrespondierend zu den Positionen der Kugelelemente (44) beabstandet sind,
die Innenfläche jeder masterseitigen Kugel aufnehmenden Nut ausgebildet ist:
mit einem masterseitigen ersten geneigten Abschnitt (30), dessen Querschnitt in Längsrichtung der Nut genommen eine Form hat, die in einer festgelegten Richtung zu der Gleitrichtung des Nockenelements (28) geneigt ist, einem geraden Abschnitt (31), der näher zu der Verriegelungsposition des Nockenelements (28) positioniert ist als der masterseitige erste geneigte Abschnitt (30) und mit dem masterseitigen ersten geneigten Abschnitt (30) verbunden ist, wobei der Querschnitt des geraden Abschnitts (31) in Längsrichtung der Nut genommen parallel zu der Gleitrichtung des Nockenelements (28) ist, und einem masterseitigen zweiten geneigten Abschnitt (32), der näher zu der Verriegelungsposition des Nockenelements (28) positioniert ist als der gerade Abschnitt (31), wobei der Querschnitt des masterseitigen zweiten geneigten Abschnitts (32) in Längsrichtung der Nut genommen in der gleichen Richtung wie die Neigungsrichtung des masterseitigen ersten geneigten Abschnitts (30) geneigt ist,
sich der masterseitige erste geneigte Abschnitt (30) und der gerade Abschnitt (31) durch einen oberen bogenförmigen Abschnitt (33) fortsetzen, dessen Querschnitt in Längsrichtung der Nut genommen bogenförmig ist, und sich der gerade Abschnitt (31) und der masterseitige zweite geneigte Abschnitt (32) durch einen unteren bogenförmigen Abschnitt (34) fortsetzen, dessen Querschnitt in Längsrichtung der Nut genommen bogenförmig ist,
die Innenfläche jeder werkzeugseitigen Kugel aufnehmenden Nut (63) mit einem werkzeugseitigen geneigten Abschnitt (64) ausgebildet ist, dessen Querschnitt in Längsrichtung der Nut genommen eine Form aufweist, die entgegengesetzt zur Richtung der Neigung des masterseitigen ersten geneigten Abschnitts (30) geneigt ist, und
die Roboterarmkopplungsvorrichtung (A) so konfiguriert ist, dass, wenn das Nockenelement (28) in der Verriegelungsposition positioniert ist, jeder masterseitige erste geneigte Abschnitt (30) ein entsprechendes Kugelelement (44) gegen einen entsprechenden werkzeugseitigen geneigten Abschnitt (64) schiebt.

2. Roboterarmkopplungsvorrichtung (A) nach Anspruch 1, **dadurch gekennzeichnet, dass** der Radius (r1) jeder masterseitigen Kugel aufnehmenden Nut (29) und/oder jeder werkzeugseitigen Kugel aufnehmenden Nut (64) von 0,05 mm größer bis zweimal größer als der Radius (r) jedes Kugelelements (44) reicht.

3. Roboterarmkopplungsvorrichtung (A) nach Anspruch 1, **dadurch gekennzeichnet, dass** der Radius (r1) jeder masterseitigen Kugel aufnehmenden Nut (29) und/oder jeder werkzeugseitigen Kugel aufnehmenden Nut (64) von 0,05 mm größer bis um das 1,5-fache größer als der Radius (r1) jedes Kugelelements reicht.

4. Robotgerarmkopplungsvorrichtung (A) nach Anspruch 1, welche weiterhin einen Drehstoppmechanismus zum Hindern des Nockenelements (28) am Drehen im Verhältnis zur Masterplatte (1) um eine Achse entlang der Gleitrichtung des Nockenelements (28) umfasst.

5. Roboterarmkopplungsvorrichtung (A) nach Anspruch 1, **dadurch gekennzeichnet, dass** die Masterplatte (1) umfasst: einen Masterkörper (4), der durch ein erstes Befestigungselement (20) an dem Roboterarm anzubringen ist, und einen Zylinderkopf (10), der an dem Masterkörper (4) durch ein zweites Befestigungselement (21) befestigt ist, das sich von dem ersten Befestigungselement (20) unterscheidet, und einen Kugelaufnahmeteil zum Aufnehmen der Kugelelemente (44) aufweist.

6. Masterplatte (1) für eine Roboterarmkopplungsvorrichtung (A), wobei die Masterplatte (1) an einem Roboterarm anbringbar ist und mit einer Werkzeugplatte (2) verbindbar ist, die eine Kugelhalterung (58) umfasst, wobei: die Kugelhalterung (58) mit mehreren werkzeugseitigen Kugel aufnehmenden Nuten (63) von im Wesentlichen bogenförmigem Querschnitt ausgebildet ist, wobei die Innenfläche jeder werkzeugseitigen Kugel aufnehmenden Nut (63) einen werkzeugseitigen geneigten Abschnitt (64) aufweist, dessen Querschnitt in Längsrichtung der Nut genommen eine Form hat, die in einer festgelegten Richtung geneigt ist,
wobei die Masterplatte (1) umfasst:
ein Nockenelement (28), das zwischen einer Verriegelungsposition und einer Entriegelungsposition gleitend ist; und
mehrere Kugelelemente (44) , die um das Nockenelement (28) angeordnet sind, wobei sie in Kugelaufnahmelöchern (15) zur Bewegung im Wesentlichen orthogonal zu einer Gleitrichtung des Nockenelements (28) gelagert sind, wobei die Kugelelemente (44) konfiguriert sind, bei Bewegung des Nockenelements (28) zu der Verriegelungsposition mit den entsprechenden werkzeugseitigen geneigten Abschnitten (64) der Kugelhalterung (58) in Kontakt zu kommen und die Werkzeugplatte (2) mit der Masterplatte (1) verbunden zu halten,
wobei das Nockenelement (28) mehrere masterseitige Kugel aufnehmende Nute (29) von im Wesentlichen bogenförmigen Querschnitt aufweist, die so ausgebildet sind, dass sie sich im Wesentlichen entlang der Gleitrichtung des Nockenelements (28) erstrecken, und jeweils in der Lage sind, ein entsprechendes Kugelelement (44) aufzunehmen, wobei die masterseitigen Kugel aufnehmenden Nute (29) in der Umfangsrichtung des Nockenelements (28) korrespondierend mit den Positionen der Kugelelemente (44) beabstandet sind, und
wobei die Innenfläche jeder masterseitigen Kugel aufnehmenden Nut (29) ausgebildet ist: mit einem masterseitigen ersten geneigten Abschnitt (30), dessen Querschnitt in Längsrichtung der Nut genommen eine Form aufweist, die entgegengesetzt zur Richtung der Neigung des werkzeugseitigen geneigten Abschnitts (64) geneigt ist, wobei der masterseitige erste geneigte Abschnitt (30) ein entsprechendes Kugelelement (44) gegen einen entsprechenden werkzeugseitigen geneigten Abschnitt (64) schiebt, wenn das Nockenelement (28) in der Verriegelungsposition positioniert ist, einem geraden Abschnitt (31), der näher zu der Verriegelungsposition des Nockenelements (28) positioniert ist als der masterseitige erste geneigte Abschnitt (30) und mit dem masterseitigen ersten geneigten Abschnitt (30) verbunden ist, wobei der Querschnitt des geraden Abschnitts (31) in Längsrichtung der Nut genommen zu der Gleitrichtung des Nockenelements (28) parallel ist, und einem masterseitigen zweiten geneigten Abschnitt (32), der näher zu der Verriegelungsposition des Nockenelements (28) positioniert ist als der gerade Abschnitt (31), wobei der Querschnitt des masterseitigen zweiten geneigten Abschnitts (32) in Längsrichtung der Nut genommen in der gleichen Richtung wie die Neigungsrichtung des masterseitigen ersten geneigten Abschnitts (30) geneigt ist, und
wobei sich der masterseitige erste geneigte Abschnitt (30) und der gerade Abschnitt durch einen oberen bogenförmigen Abschnitt (33) fortsetzen, dessen Querschnitt in Längsrichtung der Nut genommen bogenförmig ist, und sich der gerade Abschnitt (31) und der masterseitige zweite geneigte Abschnitt (32) durch einen unteren bogenförmigen Abschnitt (34) fortsetzen, dessen Querschnitt in Längsrichtung der Nut genommen bogenförmig ist.

7. Roboterarmkopplungsvorrichtung (A) nach Anspruch 1, die für einen Roboter zum Handhaben eines Werkstücks verwendet wird, um es in einem Pressprozess an einer Fahrzeugfertigungsstraße von einer Presse zu einer anderen zu bewegen.

8. Fahrzeugfertigungsverfahren, welches das Verwenden der Roboterarmkopplungsvorrichtung (A) nach Anspruch 1 zum Handhaben einer Werkstücks umfasst, um es in einem Pressprozess an einer Fahrzeugfertigungsstraße von einer Presse zu einer anderen zu bewegen.

## Revendications

1. Appareil de couplage d'un bras robotique (A) comprenant: une plaque maître (1) pouvant être fixée à un bras robotique; une plaque d'outil (2) sur laquelle un outil ou élément analogue peut être fixé; et un dispositif de verrouillage pour joindre et verrouiller les deux plaques ensemble, ledit dispositif de verrouillage comportant: un élément de came (28) supporté sur la plaque maître (1) d'une manière coulissante entre une position de verrouillage et une position de déverouillage; plusieurs éléments de bille (44) agencés autour de l'élément de came (28) et supportés dans des trous de réception de bille (15) de la plaque maître (1) pour un mouvement sensiblement orthogonal à une direction de coulissement de l'élément de came (28); et un organe de retenue (58) des billes disposé à la plaque d'outil (2) et pouvant être mis en prise avec les éléments de bille (44) pour maintenir les deux plaques reliées l'une à l'autre lorsque l'élément de came (28) se déplace vers la position de verrouillage, dans lequel
l'élément de came (28) possède plusieurs rainures de réception de bille côté maître (29) d'une section transversale sensiblement arquée formées pour s'étendre sensiblement dans la direction de coulissement de l'élément de came (28) et chacune apte à recevoir un élément de bille correspondant (44), lesdites rainures de réception de bille côté maître (29) étant espacées dans la direction circonférentielle de l'élément de came (28) en correspondance avec les positions des éléments de bille (44),
l'élément de retenue de billes (58) possède plusieurs rainures de réception de bille côté outil (63) d'une section transversale sensiblement arquée formées pour s'étendre sensiblement dans la direction de coulissement de l'élément de came (28) et chacune apte à recevoir un élément de bille correspondant (44), lesdites rainures de réception de bille côté outil (63) étant espacées dans la direction circonférentielle de l'organe de retenue de bille (58) en correspondance avec les positions des éléments de bille (44),
la surface intérieure de chaque rainure de réception de bille côté maître présente une première portion inclinée (30) côté maître dont la section transversale prise dans le sens de la longueur de la rainure a une forme inclinée dans une direction spécifiée par rapport à la direction de coulissement de l'élément de came (28), une portion droite (31) plus proche de la position de verrouillage de l'élément de came (28) que la première portion inclinée (30) côté maître et reliée à la première portion inclinée côté maître (30), la section transversale de ladite portion droite (31) prise dans le sens de la longueur de la rainure étant parallèle à la direction de coulissement de l'élément de came (28), et une deuxième portion inclinée (32) côté maître située plus proche de la position de verrouillage de l'élément de came (28) que la portion droite (31), la section transversale de ladite deuxième portion inclinée (32) côté maître prise dans le sens de la longueur de la rainure étant inclinée dans la même direction que la direction d'inclinaison de la première portion inclinée (30) côté maître, la première portion inclinée (30) côté maître et la portion droite (31) continuent par une portion arquée supérieure (33) dont la section transversale prise dans le sens de la longueur de la rainure est arquée, et la portion droite (31) et la deuxième portion inclinée (32) côté maître continuent par une portion arquée inférieure (34) dont la section transversale prise dans le sens de la longueur de la rainure est arquée,
la surface intérieure de chaque rainure de réception de bille côté outil (63) présente une portion inclinée côté outil (64) dont la section transversale prise dans le sens de la longueur de la rainure a une forme inclinée opposée à la direction d'inclinaison de la première portion inclinée côté maître (30), et
l'appareil de couplage du bras robotique (A) est configuré de façon que lorsque l'élément de came (28) est positionné dans 1a position de verrouillage, chaque première portion inclinée côté maître précitée (30) pousse un élément de bille correspondant précité (44) contre une portion inclinée correspondante côté outil (64).

2. Appareil de couplage d'un bras robotique (A) selon la revendication 1, dans lequel le rayon (r1) de chaque rainure de réception de bille côté maître (29) et/ou de chaque rainure de réception de bille côté outil (64) est de 0,05 mm plus grand au double de la largeur du rayon (r) de chaque élément de bille précité (44).

3. Appareil de couplage d'un bras robotique (A) selon la revendication 1, dans lequel le rayon (r1) de chaque rainure de réception de bille côté maître précitée (29) et/ou de chaque rainure de réception de bille côté outil (64) est de 0,05 mm plus grand à 1,5 fois plus grand que le rayon (r1) de chaque élément de bille précité.

4. Appareil de couplage d'un bras robotique (A) selon la revendication 1, comprenant en outre un mécanisme d'arrêt de rotation pour empêcher que l'élément de came (28) tourne relativement à la plaque maître (1) autour d'un axe dans la direction de coulissement de l'élément de came (28).

5. Appareil de couplage d'un bras robotique (A) selon la revendication 1, dans lequel la plaque maître (1) comprend un corps maître (4) à fixer au bras robotique par un premier élément de fixation (20) et une culasse (10) fixée au corps maître (4) par un deuxième élément de fixation (21) différent du premier élément de fixation (20) et ayant une partie de réception de bille pour la réception des éléments de bille (44).

6. Plaque maître (1) pour un appareil de couplage d'un bras robotique (A), ladite plaque maître (1) pouvant être fixée à un bras robotique et pouvant être reliée à une plaque d'outil (2) comportant un organe de retenue de bille (58), où
l'organe de retenue de bille (58) présente une pluralité de rainures de réception de bille côté outil (63) d'une section transversale sensiblement arquée, la surface intérieure de chaque rainure de réception de bille côté outil (63) ayant une portion inclinée côté outil (64) dont la section transversale prise dans le sens de la longueur de la rainure a une forme inclinée dans une direction spécifiée,
la plaque maître (1) comprend:
un élément de came (28) apte à coulisser entre une position de verrouillage et une position de déverrouillage; et
une pluralité d'éléments de bille (44) agencés autour de l'élément de came (28) supportés dans des trous de réception de bille (15) pour un mouvement sensiblement orthogonal à une direction de coulissement de l'élément de came (28), lesdits éléments de bille (44) étant configurés, lors d'un mouvement de l'élément de came (28) vers la position de verrouillage, pour venir en contact avec les portions inclinées correspondantes côté outil (64) de l'organe de retenue de bille (58) et maintiennent la plaque d'outil (2) reliée à la plaque maître (1),
l'élément de came (28) possède une pluralité de rainures de réception de bille côté maître (29) d'une section transversale sensiblement arquée formées pour s'étendre sensiblement dans la direction de coulissement de l'élément de came (28) et chacune apte à recevoir un élément de bille correspondant précité (44), lesdites rainures de réception de bille côté maître (29) étant espacées dans la direction circonférentielle de l'élément de came (28) en correspondance avec les positions des éléments de bille (44), et
la surface intérieure de chaque rainure de réception de bille précitée côté maître (29) présente une première portion inclinée côté maître (30) dont la section transversale prise dans le sens de la longueur de la rainure a une forme inclinée opposée à la direction d'inclinaison de la portion inclinée côté outil (64), ladite première portion inclinée côté maître (30) poussant un élément de bille correspondant précité (44) contre une portion inclinée correspondante côté outil précitée (64) lorsque l'élément de came (28) est positionné dans la position de verrouillage, une portion droite (31) plus proche de la position de verrouillage de l'élément de came (28) que la première portion inclinée côté maître (30) et reliée à la première portion inclinée côté maître (30), la section transversale de ladite portion droite (31) prise dans le sens de la longueur de la rainure étant parallèle à la direction de coulissement de l'élément de came (28), et une deuxième portion inclinée côté maître (32) plus proche de la position de verrouillage de l'élément de came (28) que la portion droite (31), la section transversale de ladite deuxième portion inclinée côté maître (32) prise dans le sens de la longueur de la rainure étant inclinée dans la même direction que la direction d'inclinaison de la première portion inclinée côté maître (30), et la première portion inclinée côté maître (31) et la portion droite continuent par une portion arquée supérieure (33) dont la section transversale prise dans le sens de la longueur de la rainure est arquée, et la portion droite (31) et la deuxième portion inclinée côté maître (32) continuent par une portion arquée inférieure (34) dont la section transversale prise dans le sens de la longueur de la rainure est arquée.

7. Appareil de couplage d'un bras robotique (A) selon la revendication 1, utilisé pour un robot pour manipuler une pièce pour l'amener d'une machine de pressage à une autre dans un processus de pressage sur une chaîne de production de véhicules.

8. Procédé de fabrication d'un véhicule comprenant l'utilisation de l'appareil de couplage d'un bras robotique (A) selon la revendication 1 pour manipuler une pièce pour l'amener d'une machine de pressage à une autre dans un processus de pressage sur une chaîne de production de véhicules.
